# FASCICULE DE BREVET EUROPEEN

(11) **EP 4 670 921 B1**
(45) Date de publication et mention de la délivrance du brevet: **28.10.2026**
(21) Numéro de dépôt: 24306057.1
(22) Date de dépôt: 28.06.2024
(51) Int. Cl.: B25J 1/08, B25J 9/10, B25J 18/02

(54) **DISPOSITIF TELESCOPIQUE POUR BRAS MOTORISE DE TELE OPERATION ET BRAS LE COMPRENANT**
TELESKOPVORRICHTUNG FÜR EINEN MOTORISIERTEN ARM EINES TELEOPERATIONS UND ARM DAMIT
TELESCOPIC DEVICE FOR A MOTORISED OPERATING ARM AND ARM COMPRISING SAME

(43) Date de publication de la demande: 31.12.2025
(73) Titulaire: Soletanche Freyssinet, 92500 Rueil Malmaison (FR)
(72) Inventeur: BESNARD, Christophe, 50470 LA GLACERIE (FR); COURTEILLE, Samuel, 30200 VENEJEAN (FR)
(74) Mandataire: Plasseraud IP

(56) Documents cités:
- EP-B1- 1 722 934
- CN-A- 107 697 631
- FR-A- 1 191 667
- FR-A1- 2 530 526
- FR-A1- 2 542 658
- FR-A1- 2 976 513
- JP-A- H05 118 399
- JP-A- H05 231 426
- US-A1- 2015 003 945

## Description

### Domaine technique

L'invention relève du domaine des bras motorisés de télé opération pourvus d'un dispositif de préhension télescopique notamment destinés à manipuler des éléments irradiés par exemple dans les enceintes de centrales nucléaires ou centres de retraitement de déchets.

### Technique antérieure

Des dispositifs de télé opération à bras télémanipulateurs esclaves télescopiques motorisés comportant des systèmes de manœuvre à câbles longeant l'extérieur de tubes de ces bras pour transmettre les commandes de moteurs situés en bout de bras maîtres disposés dans un poste de commande sont connus. Selon un perfectionnement, le document FR 2 667 532 A1 transforme les bras télémanipulateurs en bras manipulateurs en remplaçant le bras maître par un boîtier de commande pourvu de moteurs électriques pour actionner les transmissions par câbles et des tiges pour commander les diverses parties du bras : épaule rotative, tubes télescopiques et terminaison de manipulation d'outils. Des exemples de bras manipulateurs pourvus d'une motorisation intégrée au bras et comportant des moteurs électriques répartis dans le bras tant pour l'épaule que pour les tubes télescopiques et la terminaison sont connus des documents FR 2 935 630 A1 et FR 2 976 513 A1. Sur ce type de bras une transmission de mouvement de déploiement et de rétraction d'une partie télescopique du bras est réalisée au moyen d'un dispositif à vis et noix taraudée comportant une tige taraudée formant la noix taraudée et recevant une tige filetée formant la vis, externe aux tubes formant ladite partie télescopique du bras, et raccordé à un tube intermédiaire du bras. Ce dispositif permet de déplacer le tube intermédiaire par rapport à un premier tube proximal fixe par rapport à une épaule du bras tandis qu'un troisième tube distal se déplace par rapport au tube intermédiaire au moyen d'un dispositif dit doubleur à chaine. Ces bras à motorisation répartie dont la transmission des mouvements se fait par des liaisons mécaniques dites rigides, telles que les liaisons à engrenages, pignons, roues dentées, vis et chaines qui a contrario des liaisons élastiques telles que les transmissions par câbles sont précis et permettent notamment une automatisation des commandes de mouvements des bras du fait de la reproductibilité des positionnements lors des mouvements relatifs des diverses parties du bras. Dans l'art antérieur le document FR1 191 667 A décrit un dispositif télescopique à tube commandé au niveau d'un tube fixe par une manivelle, le document FR2 530 526 A1 décrit un dispositif télescopique à tube commandé au niveau d'un tube fixe par un moteur électrique agissant sur des courroies et poulies pour commander l'extension rétraction des tubes et le document CN107697631 A décrit un dispositif télescopique à trois branches commandé par un moteur et un convoyeur au niveau d'une branche intermédiaire.

### Problème technique

Les solutions connues à motorisations réparties résolvent bien les problème de répétabilité des mouvements mais ne permettent toutefois pas de réduire la section hors tout des bras afin de passer dans des diamètres de trous de passage de cloisons réduits tout en gardant une capacité de soulèvement du bras importante du fait que pour un diamètre de trou de passage donné, par exemple 15 cm, le dispositif à tige de commande du dispositif de bras télescopique externe au bras limite le diamètre du tube à un diamètre d'environ 10 cm voir moins ce qui limite le diamètre du moteur de commande disposé à l'extrémité du bras jouxtant l'épaule du bras.

### Exposé de l'invention

Au vu de cette situation la présente divulgation propose un dispositif selon la revendication 1.

Les caractéristiques exposées dans les paragraphes suivants correspondent à des modes de réalisation pouvant être mis en œuvre indépendamment les uns des autres ou en combinaison les uns avec les autres:

Le premier moteur électrique peut être accouplé au pignon d'entrainement au travers de pignons formant un réducteur.

Le convoyeur à chaine peut comporter un raidisseur et un dispositif tendeur entre le pignon d'entrainement et le pignon suiveur.

Le pignon d'entrainement et le premier moteur électrique peuvent être montés sur un support rendu solidaire du tube intermédiaire.

La présente divulgation concerne en outre un bras motorisé de télé opération pourvu d'un dispositif télescopique selon l'une quelconque des revendications précédentes, pour lequel l'articulation est mue par un deuxième moteur électrique disposé dans une partie amont de ladite épaule et pilotant la rotation de l'épaule au travers d'un système réducteur agissant sur un secteur denté solidaire d'une partie aval de l'épaule mobile en rotation par rapport à la partie amont.

La partie amont de l'épaule peut comporter une première chape solidaire d'un tube rotatif de traversée de cloison.

Le tube externe est préférablement solidarisé avec l'épaule au moyen d'une chape formant une partie aval de l'articulation de l'épaule.

### Brève description des dessins

D'autres caractéristiques, détails et avantages de l'invention apparaîtront à la lecture de la description détaillée ci-après d'exemples de réalisation non limitatifs, et à l'analyse des dessins annexés, sur lesquels :
[Fig. 1] montre une vue d'ensemble d'un bras motorisé de télé opération;
[Fig. 2A] montre une vue éclatée d'un dispositif télescopique de la présente divulgation;
[Fig. 2B] montre une partie aval du dispositif télescopique de la figure 2A;
[Fig. 3] montre un convoyeur à chaine du dispositif de la figure 2;
[Fig. 4] montre un détail de fixation d'un tube externe sur une tige de liaison sur le convoyeur à chaine;
[Fig. 5] montre une partie aval d'épaule du bras de la figure 1 ;

### Description des modes de réalisation

Les dessins et la description ci-après contiennent des éléments pouvant non seulement servir à mieux faire comprendre la présente invention, mais aussi contribuer à sa définition, le cas échéant.

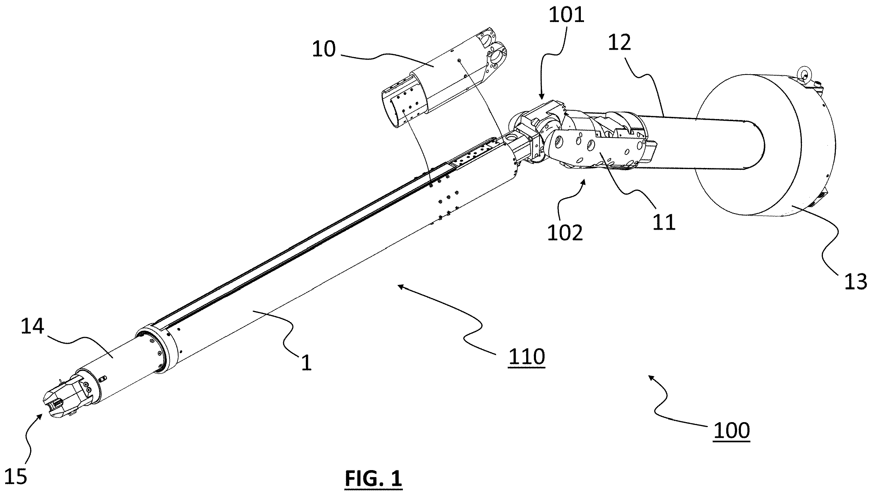

Il est maintenant fait référence à la figure 1 qui représente un bras de télé opération motorisé 100 comportant un corps 13 dans lequel se trouve un moteur de manœuvre en rotation d'un tube traversée de cloison 11 selon mouvement appelé mouvement en X du bras, dont une extrémité proximale est montée sur le corps 13, et des connexions de câbles électrique de commande de moteurs électriques répartis dans le bras. A une extrémité distale du tube de traversée de cloison 12 se trouve une épaule pourvue d'une articulation 101 réalisant un mouvement Y du bras. L'épaule comporte d'un côté amont, côté tube de traversée de cloison, une première chape 11 renfermant un moteur de manœuvre en rotation de l'épaule et comporte côté aval une seconde chape 10 articulée sur la première chape et supportant une extrémité proximale d'un dispositif télescopique 110 comportant à une extrémité distale un dispositif 14 manipulateur d'outils, le télescope réalisant un mouvement du bras appelé mouvement en Z.

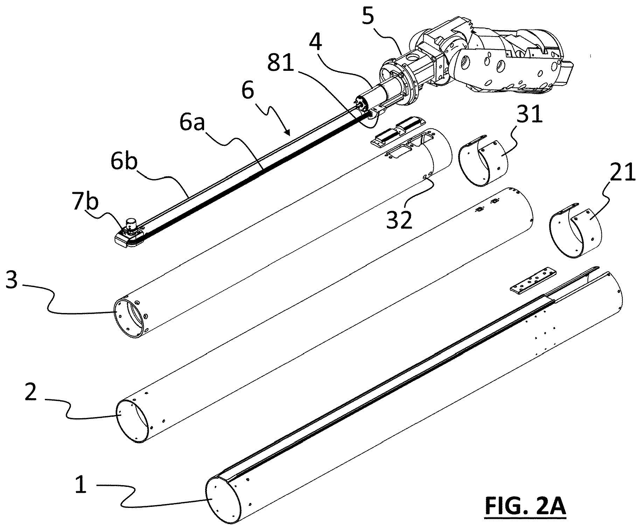

Le dispositif télescopique 110 du bras de télé opération 100, plus particulièrement détaillé aux figures 2A à 4, comporte selon la figure 2A un tube externe 1 fixe par rapport à l'articulation 101 formant épaule du bras et qui définit une extrémité proximale du dispositif télescopique.

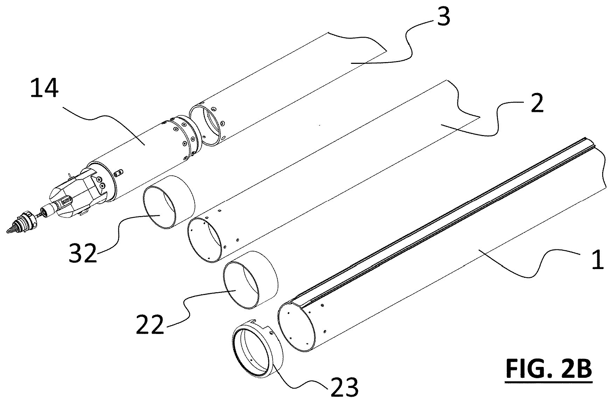

Le dispositif télescopique comporte en outre un tube intermédiaire 2 et un tube interne 3 pourvu à une extrémité distale du dispositif télescopique du dispositif 14 manipulateur d'outils comme représenté en figure 2B vue éclatée de l'extrémité distale du dispositif télescopique.

Le tube intermédiaire 2 coulisse dans le tube externe 1 et le tube interne 3 coulisse dans le tube intermédiaire 2. Entre les tubes, côté proximal se trouvent des bagues ou patins de glissement 21, 31. De même, entre les tubes côté distal se trouvent des secondes bagues ou patins de glissement 22, 32 assurant un coulissement aisé des tubes les uns dans les autres.

Figure 2A, le dispositif télescopique comporte un premier moteur électrique 4 solidaire d'une extrémité du tube intermédiaire 2 côté extrémité proximale. Ce moteur 4 est accouplé à un pignon d'entrainement 7a d'un convoyeur à chaine 6 s'étendant au travers du tube interne en direction de l'extrémité distale. L'accouplement peut être réalisé avec un engrenage en sortie d'arbre du moteur entrainant un engrenage solidaire du pignon d'entrainement 7a.

La chaine 6 du convoyeur à chaine comporte deux brins entre le pignon d'entrainement 7a et un pignon suiveur 7b côté extrémité distale et on définit un brin aller 6a et un brin retour 6b le brin aller se déplaçant depuis l'extrémité proximale vers l'extrémité distale du convoyeur et le brin retour se déplaçant à l'inverse lors de l'extension du dispositif télescopique.

Le tube interne 3 est solidarisé au brin aller à proximité dudit moteur 4 au moyen d'un dispositif de fixation comportant une première attache 61 sur la chaine, une première extrémité d'une première tige 8 se fixant sur la première attache par des vis reçues dans des trous 82 sur la tige et des trous taraudés sur ladite première attache 61, une seconde extrémité de la première tige comportant un premier sabot 81 pourvu de trous taraudés recevant des vis traversant des trous dans le tube interne 3. La première tige 8 est une tige courte reliant la partie proximale du tube interne au brin aller de la chaine côté extrémité proximale.

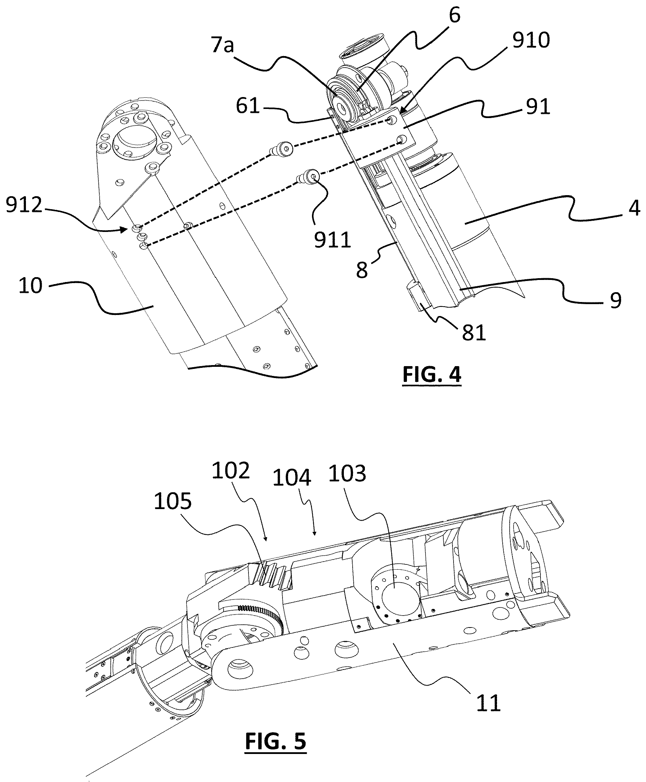

Le tube externe 1 est pour sa part solidarisé au brin retour côté pignon suiveur 7b au travers d'une une deuxième tige 9 qui se fixe sur une deuxième attache 62 sur la chaine côté pignon suiveur 7b et qui s'étend le long du convoyeur à chaine depuis l'extrémité distale dudit convoyeur vers son extrémité proximale côté moteur pour se fixer sur le tube externe au moyen d'un second sabot 91 pourvu de trous taraudés 910 recevant des vis 911 traversant des trous 912 de la deuxième chape 10 sur laquelle est fixée l'extrémité proximale du tube externe comme représenté en figure 4.

Un premier sens de rotation du moteur 4 définit une extension du dispositif télescopique et lorsque le pignon d'entrainement 7a tourne selon ce sens de rotation sous l'action du moteur 4, le brin aller 6a se déplace en direction de ladite extrémité distale et le brin retour 6b se déplace en direction de ladite extrémité proximale.

En considérant que la deuxième chape 10 constitue un point fixe, dispositif télescopique rétracté une rotation du premier moteur électrique 4 dans le sens extension du dispositif télescopique pousse l'ensemble tube intermédiaire, moteur et convoyeur à chaine et tube central dans la direction d'extension. Autrement dit en considérant un repère lié au tube intermédiaire 2, le tube externe 1 et le tube interne 3 sont poussés dans deux directions opposées par rapport à ce tube intermédiaire 2 par les déplacements opposés des brins 6a, 6b de la chaine 6 ce qui cause l'extension du dispositif télescopique.

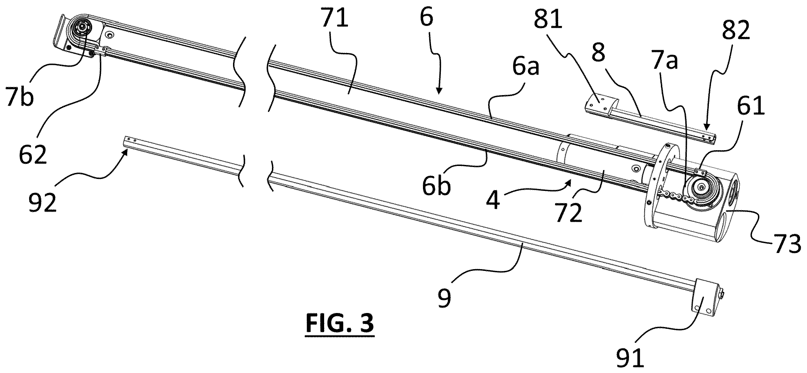

De même, dispositif télescopique en extension, une rotation du premier moteur électrique 4 dans un sens rétraction du dispositif télescopique tire les tube externe 1 et tube interne 3 l'un vers l'autre par rapport au tube intermédiaire 2 ce qui rétracte le dispositif télescopique.
Comme représenté en figure 3, le convoyeur à chaine comporte un raidisseur 71 et un dispositif tendeur 72 entre le pignon d'entrainement 7a et le pignon suiveur 7b de sorte que la chaine soit tendue. Le convoyeur à chaine constitue ainsi une liaison mécanique dite rigide entre le pignon d'entrainement et le pignon suiveur ce qui garantit une bonne reproductibilité des mouvements d'extension/rétraction du dispositif télescopique au contraire de dispositifs à câbles et une grande précision de ces mouvements.

Toujours selon la figure 3, le pignon d'entrainement 7a et le premier moteur électrique 4 sont montés sur un support 73 solidaire du tube intermédiaire 2 et qui s'insère et se visse dans ce dernier.

L'articulation 101 représentée notamment en figure 5 est mue par un deuxième moteur électrique 103 appelé moteur épaule mouvement Y disposé dans une partie amont 102 de ladite épaule et pilotant la rotation de l'épaule au travers d'un système réducteur 104 agissant sur un secteur denté 105 solidaire de la deuxième chape 10 en partie aval de l'épaule mobile en rotation par rapport à la première chape 11 en partie amont 102 de l'épaule solidaire du tube rotatif 12 de traversée de cloison.

## Revendications

1. Dispositif télescopique (110) de bras de télé opération (100), comportant une tube externe (1) fixe par rapport à une articulation (101) de montage formant épaule du bras et définissant une extrémité proximale du dispositif télescopique, un tube intermédiaire (2) et un tube interne (3) pourvu à une extrémité distale du dispositif télescopique d'un dispositif (14) manipulateur d'outils, le tube intermédiaire (2) coulissant dans le tube externe (1) et le tube interne (3) coulissant dans le tube intermédiaire (2), qui comporte :
un premier moteur électrique (4) solidaire d'une extrémité du tube intermédiaire côté extrémité proximale,
ledit moteur étant accouplé à un pignon d'entrainement (7a) d'un convoyeur à chaine (6) s'étendant au travers du tube interne en direction de l'extrémité distale,
ledit convoyeur à chaine comportant un brin aller (6a) et un brin retour (6b) entre ledit pignon d'entrainement (7a) et un pignon suiveur (7b) côté extrémité distale,
ledit brin aller (6a) se déplaçant en direction de ladite extrémité distale et le brin retour (6b) se déplaçant en direction de ladite extrémité proximale lors d'une extension du dispositif télescopique,
et pour lequel le tube interne (3) est solidarisé (61, 81, 82) au travers d'une première tige (8) au brin aller à proximité dudit moteur (4) tandis que le tube externe (1) est solidarisé au brin retour côté pignon suiveur (7b) au travers d'une deuxième tige (9) s'étendant le long du convoyeur à chaine de sorte que, par rapport au tube intermédiaire :
a - dispositif télescopique rétracté, une rotation du premier moteur électrique (4) dans le sens extension du dispositif télescopique pousse le tube externe (1) et le tube interne (3) dans deux directions opposées par rapport à un repère lié au tube intermédiaire (2) ce qui cause l'extension du dispositif télescopique et de sorte que,
b - dispositif télescopique en extension, une rotation du premier moteur électrique (4) dans un sens rétraction du dispositif télescopique tire les tube externe (1) et tube interne (3) l'un vers l'autre.

2. Dispositif télescopique selon la revendication 1, pour lequel le convoyeur à chaine comporte un raidisseur (71) et un dispositif tendeur (72) entre le pignon d'entrainement (7a) et le pignon suiveur (7b).

3. Dispositif télescopique selon la revendication 1 ou 2, pour lequel le pignon d'entrainement (7a) et le premier moteur électrique (4) sont montés sur un support (73) solidaire du tube intermédiaire (2).

4. Bras motorisé de télé opération (100) pourvu d'un dispositif télescopique selon l'une quelconque des revendications précédentes, pour lequel l'articulation (101) est mue par un deuxième moteur électrique (103) disposé dans une partie amont (102) de ladite épaule et pilotant la rotation de l'épaule au travers d'un système réducteur (104) agissant sur un secteur denté (105) solidaire d'une partie aval de l'épaule mobile en rotation par rapport à la partie amont.

5. Bras motorisé de télé opération selon la revendication 4, pour lequel la partie amont (102) de l'épaule comporte une première chape (11) solidaire d'un tube rotatif (12) de traversée de cloison.

6. Bras motorisé de télé opération selon la revendication 4 ou 5, pour lequel le tube externe est solidarisé avec l'épaule au moyen d'une deuxième chape (10) formant une partie aval de l'articulation de l'épaule.

## Patentansprüche

1. Teleskopvorrichtung (110) für einen Fernbetätigungsarm (100), aufweisend ein Außenrohr (1), das fest bezüglich eines Montagegelenks (101) ist, das eine Schulter des Arms bildet und ein proximales Ende der Teleskopvorrichtung definiert, ein Zwischenrohr (2) und ein Innenrohr (3), das an einem distalen Ende der Teleskopvorrichtung mit einer Werkzeugmanipulationsvorrichtung (14) versehen ist, wobei das Zwischenrohr (2) in dem Außenrohr (1) verschiebbar ist und das Innenrohr (3) in dem Zwischenrohr (2) verschiebbar ist, wobei das Zwischenrohr aufweist:
einen ersten elektrischen Motor (4), der mit einem Ende des Zwischenrohrs verbunden ist, auf Seiten des proximalen Endes,
wobei der Motor mit einem Antriebsrad (7a) zum Antreiben eines Kettenförderers (6) gekoppelt ist, der sich durch das Innenrohr in Richtung des distalen Endes erstreckt,
wobei der Kettenförderer einen Vorlaufstrang (6a) und einen Rücklaufstrang (6b) zwischen dem Antriebsrad (7a) und einem Mitläuferrad (7b) auf Seiten des distalen Endes aufweist,
bei einer Verlängerung der Teleskopvorrichtung der Vorlaufstrang (6a) sich in Richtung distales Ende bewegt und der Rücklaufstrang (6b) sich in Richtung des proximalen Endes bewegt,
und wobei das Innenrohr (3) in der Nähe des Motors (4) via eine erste Stange (8) mit dem Vorlaufstrang verbunden ist (61, 81, 82) während das Außenrohr (1) via eine zweite Stange (9), die sich entlang des Kettenförderers erstreckt, auf Seiten des Mitläuferrads (7b) mit dem Rücklaufstrang verbunden ist, so dass bezüglich des Zwischenrohrs:
a- zurückgezogene Teleskopvorrichtung, eine Rotation des ersten elektrischen Motors (4) in Sinne einer Verlängerung der Teleskopvorrichtung das Außenrohr (1) und das Innenrohr (3) bezüglich einer an dem Zwischenrohr (2) angebrachten Referenzmarke in zwei entgegengesetzte Richtung schiebt, was die Verlängerung der Teleskopvorrichtung bewirkt, und so dass
b - Teleskopvorrichtung in Verlängerung, eine Rotation des ersten elektrischen Motors (4) im Sinne eines Rückzugs der Teleskopvorrichtung das Außenrohr (1) und das Innenrohr (3) zueinander hinzieht.

2. Teleskopvorrichtung nach Anspruch 1, wobei der Kettenförderer eine Versteifung (71) und eine Spannvorrichtung (72) zwischen dem Antriebsrad (7a) und dem Mitläuferrad (7b) aufweist.

3. Teleskopvorrichtung nach Anspruch 1 oder 2, wobei das Antriebsrad (7a) und der erste elektrische Motor (4) auf einem mit dem Zwischenrohr (2) verbundenen Träger (73) angebracht sind.

4. Motorisierter Fernbetätigungsarm (100), der mit einer Teleskopvorrichtung nach einem der vorstehenden Ansprüche versehen ist, wobei das Gelenk (101) von einem zweiten elektrischen Motor (103) bewegt wird, der in einem stromaufwärtsseitigen Teil (102) der Schulter angeordnet ist und die Rotation der Schulter via ein Getriebesystem (104) steuert, das auf einen gezahnten Sektor (105) einwirkt, der mit einem stromabwärtsseitigen Teil der Schulter verbunden ist, der rotierbar bezüglich des stromaufwärtsseitigen Teils ist.

5. Motorisierter Fernbetätigungsarm nach Anspruch 4, wobei der stromaufwärtsseitige Teil (102) der Schulter eine erste Kappe (11) aufweist, die mit einem rotierbaren Wanddurchlassrohr (12) verbunden ist.

6. Motorisierter Fernbetätigungsarm nach Anspruch 4 oder 5, wobei das Außenrohr mithilfe einer zweiten Kappe (10), die einen stromabwärtsseitigen Teil des Gelenks der Schulter bildet, mit der Schulter verbunden ist.

## Claims

1. Telescopic device (110) of a remote-operation arm (100), comprising an outer tube (1) that is fixed relative to a mounting joint (101) that forms the shoulder of the arm and defines a proximal end of the telescopic device, an intermediate tube (2) and an inner tube (3) provided at a distal end of the telescopic device with a toolmanipulator device (14), the intermediate tube (2) sliding in the outer tube (1) and the inner tube (3) sliding in the intermediate tube (2), that comprises:
a first electric motor (4) secured to one end of the intermediate tube at its proximal end side,
said motor being coupled to a drive pinion (7a) of a chain conveyor (6) extending through the inner tube towards the distal end,
said chain conveyor comprising an outbound portion (6a) and a return portion (6b) between said drive pinion (7a) and a follower pinion (7b) at the distal end side,
said outbound portion (6a) travelling towards said distal end and the return portion (6b) travelling towards said proximal end as the telescopic device extends,
and wherein the inner tube (3) is secured (61, 81, 82) via a first rod (8) to the outbound portion near said motor (4) while the outer tube (1) is secured to the return portion at the end corresponding to the follower pinion (7b) via a second rod (9) extending along the chain conveyor so that, with respect to the intermediate tube:
a- when the telescopic device is retracted, rotation of the first electric motor (4) in the direction for extending the telescopic device pushes the outer tube (1) and the inner tube (3) in two opposite directions with respect to a frame of reference associated with the intermediate tube (2) causing the telescopic device to extend, and so that,
b- when the telescopic device has been extended, rotation of the first electric motor and (4) in a direction for retracting the telescopic device pulls the outer tube (1) and the inner tube (3) towards one another.

2. Telescopic device according to Claim 1, wherein the chain conveyor comprises a stiffener (71) and a tensioner (72) between the drive pinion (7a) and the follower pinion (7b).

3. Telescopic device according to Claim 1 or 2, wherein the drive pinion (7a) and the first electric motor (4) are mounted on a support (73) secured to the intermediate tube (2).

4. Remote-operation motorized arm (100) provided with a telescopic device according to any one of the preceding claims, wherein the joint (101) is moved by a second electric motor (103) arranged in an upstream part (102) of said shoulder and driving the rotation of the shoulder via a reduction system (104) acting on a toothed sector (105) secured to a downstream part of the shoulder that is rotationally mobile with respect to the upstream part.

5. Remote-operation motorized arm according to Claim 4, wherein the upstream part (102) of the shoulder comprises a first yoke (11) secured to a wallpenetrating rotary tube (12).

6. Remote-operation motorized arm according to Claim 4 or 5, wherein the outer tube is secured to the shoulder by means of a second yoke (10) forming a downstream part of the shoulder joint.
